# EUROPEAN PATENT SPECIFICATION

(11) **EP 2 047 384 B1**
(45) Date of publication and mention of the grant of the patent: **23.03.2011**
(21) Application number: 07766375.5
(22) Date of filing: 30.07.2007
(51) Int. Cl.: G06F 17/24

(54) **STORAGE AND PROCESSING OF SPREADSHEETS AND OTHER DOCUMENTS**
SPEICHERUNG UND VERARBEITUNG VON TABELLENKALKULATIONEN UND ANDEREN DOKUMENTEN
SYSTÈME DE STOCKAGE ET TRAITEMENT DE TABLEURS ET D'AUTRES DOCUMENTS

(30) Priority: 31.07.2006 US 461087
(43) Date of publication of application: 15.04.2009
(60) Divisional application: 10008362.5
(73) Proprietor: Cluster Seven Limited, 30-40 High Street Wanstead London E11 2RJ (GB)
(72) Inventor: REEVES, Andrew, Kent CT21 4AB (GB); CULVERWELL, James, Dorset BH9 1NG (GB); WITTMAN, Aaron, London W2 6DH (GB)
(74) Representative: Howe, Steven
(86) International application number: PCT/GB2007/002864
(87) International publication number: WO 2008/015395

(56) References cited:
- WO-A-2005/081126
- US-A- 5 303 146
- JOCELYN PAINE: "Ensuring Spreadsheet Integrity with Model Master"[Online] July 2001 (2001-07), XP002476610 Proceedings of EuSpRIG 2001, Amsterdam Retrieved from the Internet: URL:http://www.j-paine.org/eusprig2001_as_ html/eusprig2001.html> [retrieved on 2008-04-15]
- CHRISTOPHER BROWNE: "Linux Spreadsheets"[Online] 2004, XP002476608 Retrieved from the Internet: URL:http://web.archive.org/web/20040202051 344/http://cbbrowne.com/info/spreadsheets. html> [retrieved on 2008-04-15]
- ISAKOWITZ T ET AL: "TOWARD A LOGICAL/PHYSICAL THEORY OF SPREADSHEET MODELING" ACM TRANSACTIONS ON INFORMATION SYSTEMS, ACM, NEW YORK, NY, US, vol. 13, no. 1, January 1995 (1995-01), pages 1-37, XP000501181 ISSN: 1046-8188
- ALAN ZISMAN: "Lotus Improv" OUR COMPUTER PLAYER, [Online] June 1993 (1993-06), XP002476609 Retrieved from the Internet: URL:http://www.zisman.ca/Articles/1993/Imp rov.html> [retrieved on 2008-04-15]
- DAVID HAWLEY, RAINA HAWLEY: "Excel Hacks" March 2004 (2004-03), O'REILLY , XP002476611 ISBN: 059600625X Chapter 2, Hack 18.
- PAUL GOLDWATER AND LOIS S MAHONEY: "Collaborate on Spreadsheets" INTERNET CITATION, [Online] 2004, XP002373031 Retrieved from the Internet: URL:http://www.aicpa.org/PUBS/JOFA/jan2004 /gold.htm> [retrieved on 2006-03-20]

## Description

### Field of the Invention

This invention relates to the monitoring and auditing of data in spreadsheets.

### Background of the Invention

A spreadsheet application is a computer program that allows a user to manipulate two-dimensional and three-dimensional arrays of data. A user of a spreadsheet application is presented with a two-dimensional array of cells, each cell being capable of storing an entity such as an item of numeric data, text, a software object, or a formula. A three-dimensional spreadsheet has several of such arrays having a definite order. Where a cell contains a formula, the display normally shows the result of the calculation that the formula defines. The formula can include amongst its input variables the value of another cell within the spreadsheet or within another spreadsheet. Of course, the value of the other cell may be the result of calculation of a formula within the other cell. Such linkage between cells can be extended to an arbitrary degree of complexity.

Spreadsheets were conceived as tools to be used for performing quick calculations on personal data. In contrast, data and functionality that are critical to the operations of an organisation would traditionally have been stored in databases supporting computer applications that have been developed by programmers to perform specific, controlled actions on the data. Computer spreadsheets have become ubiquitous in many organisations as a result of the growth in power of personal computers. Therefore, in practice, this traditional model of how data is managed is no longer followed in many organisations. Spreadsheets that were hurriedly put together to perform a calculation that the programmed database lacked have become essential tools central to the work of their creators, and, effectively, central to the operation of the business.

In the present situation, the features of spreadsheets that make them very attractive to their users become unwelcome from the point of view of the organisation as a whole. A spreadsheet can be changed very easily. However, the interconnected nature of the cells in a spreadsheet can mean that the consequences of such a change can be very difficult to foresee. This is especially so in cases where the spreadsheet is referenced by another spreadsheet, possibly developed by another person. It is also not possible to determine the content of a spreadsheet at any given moment, so that the reasons behind a conclusion being drawn from the content of a spreadsheet may not be traceable. Moreover, the power of modern personal computers is such as to make practicable implementation of a scripting language in spreadsheet applications to perform calculations and actions of arbitrary complexity. Yet this code is not subject to version control and change tracking familiar to programmers in traditional programming languages.

Clearly, this situation is unacceptable in a large organisation since it renders the quality control of data and functionality impossible, and provides an obstacle to creation of auditable business activity (such as preparation of accounts) within the business that are required as a deterrent to financial mismanagement.

We have appreciated that it would be advantageous to provide a mechanism whereby actions performed upon a spreadsheet can be recorded in such a manner that the state of the spreadsheet at any particular time can be recovered and the evolution between states can be interrogated.

A further aim of the invention is to determine changes in a spreadsheet in such a way that actions such as row and column insertions and deletions and sorting actions which cause significant numbers of entities in the spreadsheet to shift are taken into account.

In doing this it is highly desirable that the inherent flexibility of the spreadsheet, which makes it so attractive, is not lost.

Reference is made to our International Patent Application WO 2005/081126 in relation to which the present application represents an improvement. US Patent 5,303,146 describes a scenario manager for a spreadsheet to capture modifications of a basic model. A paper by Goldwater, P., and Mahoney, L.S., "Collaborate on Spreadsheets", Journal of Accountancy Online Publication, January 2004 describes certain features of the Microsoft Excel spreadsheet of that time including the Track Changes feature.

### Summary of the Invention

The invention is defined in the independent claims. Preferred features are set out in the dependent claims.

The invention provides a system, method and computer program product for monitoring and auditing data in one or more spreadsheets. The system comprises: an entity selector for selecting one or more entities in a spreadsheet; a tracker for tracking the shift in position of the selected entities between two time points; an offset determinator arranged to derive one or more offset values from information received from the tracker, the offset values representing the shift in position of the entities in the spreadsheet; and an offset applicator for applying the offset values to the spreadsheet data before comparing the spreadsheet data with a version of the spreadsheet data at a different time point.

When a row or column is inserted or deleted, or when rows or columns are sorted, the noise resulting from the shifting of entities is removed before spreadsheets are compared. The entities in one or more selected rows and/or one or more selected columns form a sample of entities in the spreadsheet. The movements of the sample of entities in the spreadsheet are tracked to determine general movement of entities in the spreadsheet. Then, prior to comparison of two versions of a spreadsheet, the determined movement of the entities is applied to the earlier version of the spreadsheet before a cell-by-cell comparison between the two versions of the spreadsheet is performed. In this way, in the cell-by-cell spreadsheet comparison process, comparisons between equivalent shifted values are made rather than between values which happen to occupy the same cell.

An embodiment of the invention will now be described in detail, by way of example, and with reference to the accompanying drawings.

### Brief Description of the Figures

Figure 1 is a high-level diagrammatic overview of an embodiment of the invention;
Figure 2 illustrates a process of maintaining data in the embodiment of Figure 1;
Figure 3 illustrates a process of capturing files in the embodiment of Figure 1;
Figure 4 illustrates a component of the embodiment of Figure 1;
Figure 5 is an overview of a network of computers within an enterprise in which the present invention is embodied;
Figure 6 is a block diagram that shows the principal functional components of an embodiment of the invention;
Figure 7 is a diagram illustrating a base class from which other task classes are derived;
Figure 8 is a diagram illustrating various task classes;
Figure 9 is a diagram illustrating the operation of the file retrieve class;
Figure 10 is a diagram illustrating the operation of the transform class;
Figure 11 is a diagram illustrating the operation of the macro decomposer class;
Figure 12 is a diagram illustrating the operation of the compare class;
Figure 13 is a diagram illustrating the operation of the bulk load class;
Figure 14 is a diagram illustrating the operation of the XML storage class; and
Figures 15 to 18 are screenshots showing various displays generated during operation of the embodiment;
Figure 19 is a flow diagram of a method used to take into account row and column insertion and deletion processing and data sorting processing when tracking changes in a spreadsheet.

### Detailed Description of Preferred Embodiments

### Introductory description

By way of introduction a description of the system of our International Patent Application WO 2005/081126 will first be given.

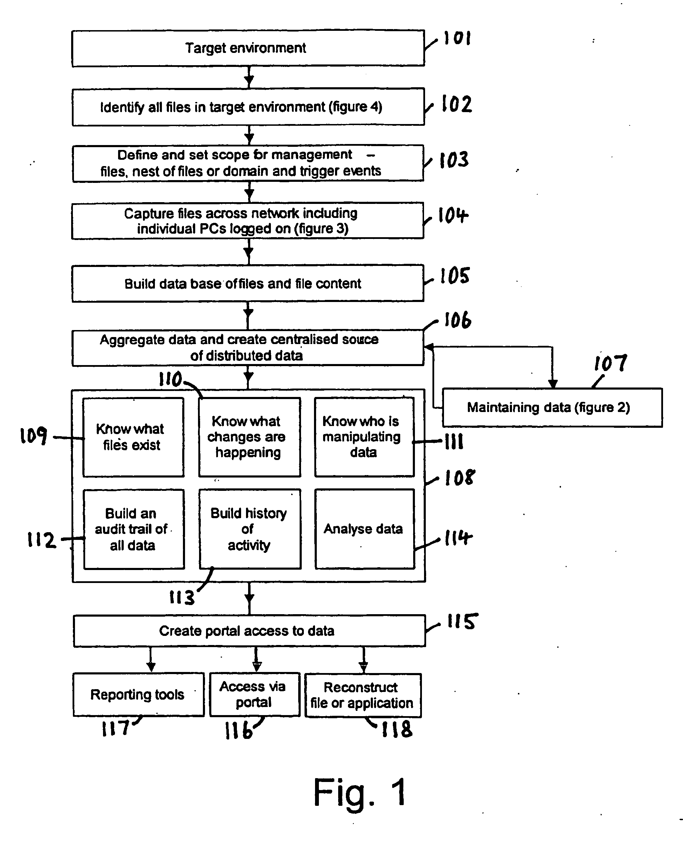

As shown in Figure 1, the embodiment is a system that works in conjunction with an existing business desktop and networking environment. In operation, the system identifies the existence of spreadsheet files within the network, and then captures those files selected by the business for management. The system then builds a database of the content of those files. Once the first database is built, the system monitors the network for events that occur in the managed file. At selected trigger events, including (but not exclusively) a file save of a spreadsheet, the system will retrieve a copy of the file, decompose it to elemental parts and compare this with the original held in the database.

The system then saves changes made in the database. Where the file has been renamed, deleted or moved, it records this in the database. The system allows the business to view data collected in the database centrally. This system can aggregate and analyse the data using a portal employing existing technologies.

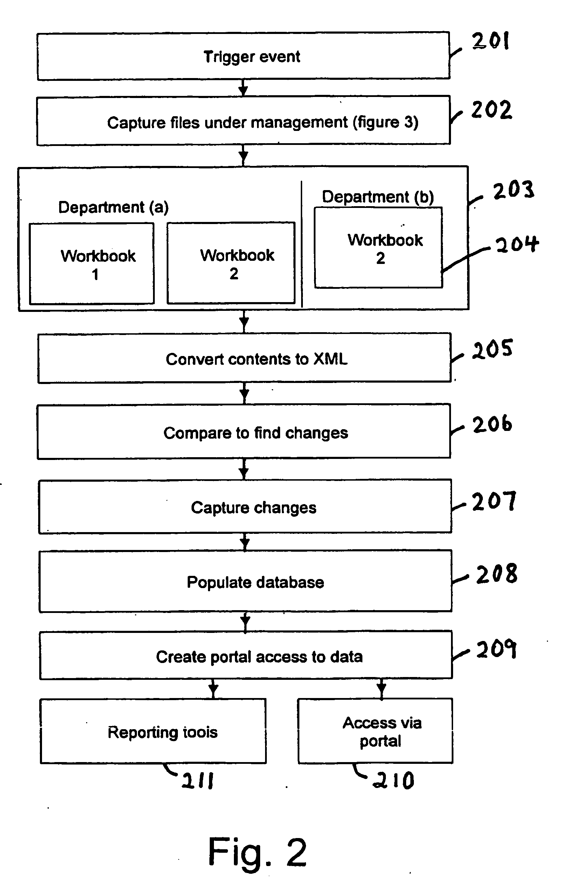

As shown in Figure 2, the system can access multiple network domains to do its work in order to maintain the files under management. The system converts the contents of the files into a representation in the Extensible Markup Language (XML) and uses this format to make comparisons. The system works at the most granular level to save files, track and identify and capture changes to files. The database is populated at this very granular level. The business user can apply their own reporting tools and analysis choices to the data. The invention does not restrict what is done with the data.

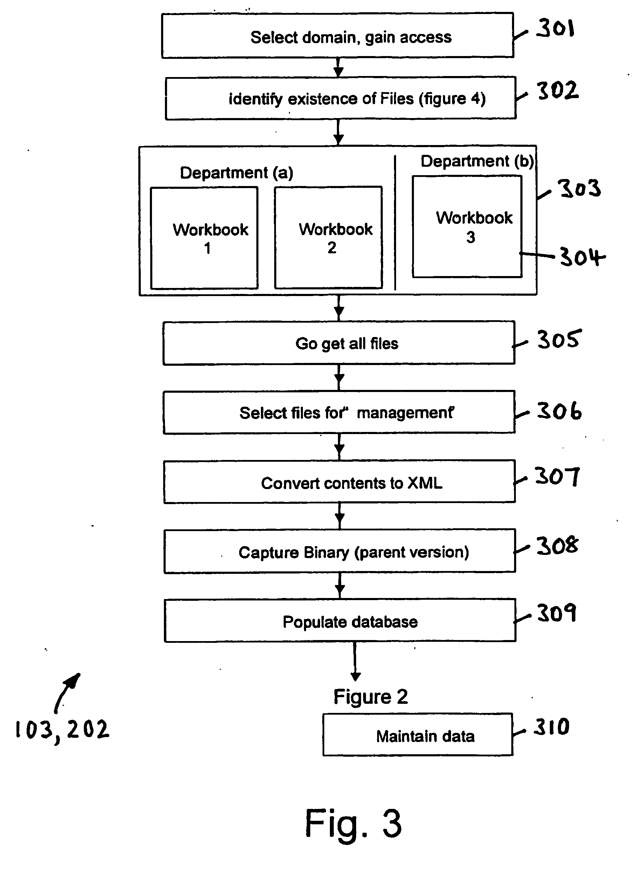

As shown in Figure 3, the system can work in domains where access has been given. It will seek out files, events and post event versions of the files to build a database.

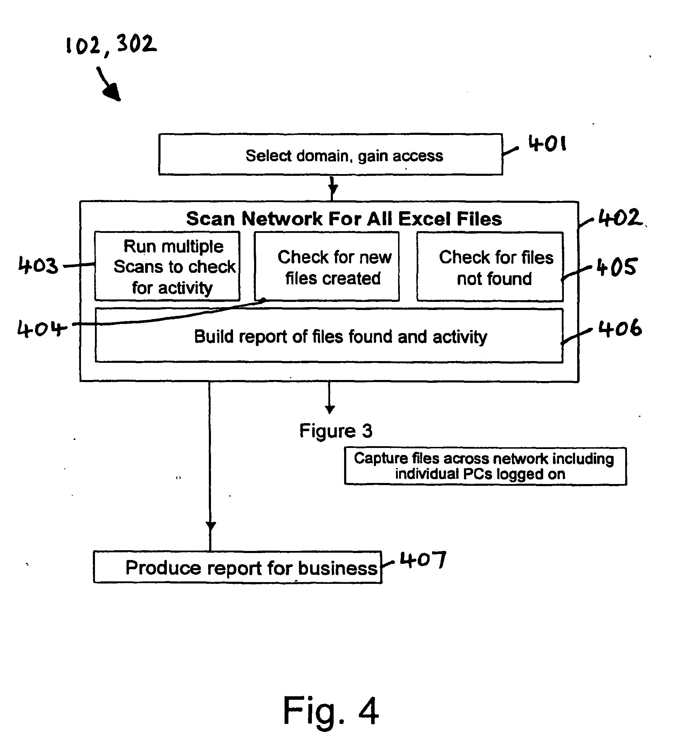

As shown in Figure 4, the system scans targeted network environments, and pulls out the list of all files to be monitored. The invention identifies the existence of files, where new files have been created since the last scan and where files have been deleted. The scan generates a report enabling either an automatic software tool or the business to trigger the capture of files for either the start of the process (Figure 1) or the maintenance of files (Figure 2).

In the embodiment, when a row or column is inserted or deleted, or when rows or columns are sorted, the noise resulting from the shifting of entities is removed before spreadsheets are compared. To achieve this, the movements of a sample of entities in the spreadsheet are tracked to determine general movement of entities in the spreadsheet. Then, prior to comparison of two versions of a spreadsheet, the determined movement of the entities is applied to the earlier version of the spreadsheet before a cell-by-cell comparison between the two versions of the spreadsheet is performed.

### Detailed Description of Figures 1 to 18

As illustrated in Figure 1 the preferred embodiment of the invention functions in a target environment, for example in an existing business desktop and networking environment. A first function of the system is to identify all files in the target environment. As illustrated in greater detail in Figure 4, this process includes selecting and accessing the appropriate domain within the target environment, scanning the network for files and producing a report for business. A next function of the system is to define and set the scope for management. This allows specific files, nests of files or domain and trigger events to be selected by the business for management. This could include a subset of the total files which are within the set scope. A next function of the system is to capture files across the network. This process includes capturing files located within individual PCs logged on to the network. As illustrated in greater detail in Figure 3, this process includes selecting and accessing the appropriate domain, retrieving files from various departments, converting the file contents to XML and populating a database. A next function of the system is to build a database of the files and file content. A further function of the system is aggregating data and creating a centralised store of distributed data.

An important parallel function is maintenance of the data, illustrated in more detail in Figure 2. The various files under management may be stored in several different PCs across the network so a centralised source of data facilitates maintenance of the data. Maintenance of the data includes capturing files under management, converting the file contents to XML, comparing and capturing changes and storing the changes in a database. When storing and maintaining data it is important to know what files exist, what changes to the files are happening and who is manipulating the data. In order to know this information an audit trail of all data and a history of activity are built, and the data is analysed by the system. In order that the data resulting from the above processes may be interrogated, a next function of the system is creating portal access to the data. Access to the data via the portal may thereby be given. Access to the data may be enhanced by the provision of reporting tools and the ability to reconstruct a file or application.

The functions involved in maintaining the data stored in the processes of Figure 1 are illustrated, in Figure 2. As a first step, a trigger event occurs such as a file save function. Next the files under management are captured, as illustrated in greater detail in Figure 3. The files under management may include, for example, workbook files residing within different departments. Some files may be manipulated in several different locations: For example, as illustrated in Figure 2, two workbooks may be located in department a, while a workbook may also be located in department b. In a next step of maintaining the data, the contents of the captured files are converted to XML. This format represents a convenient format for subsequent processing. In a next step the captured documents are compared with previous versions of the documents to find changes which have occurred. These changes are then captured and the database is populated with information representing the changes. Portal or client access to the data is created so that access to the data via the portal or client is provided. The reporting tools provided by the system enhance the portal access.

The functions involved in capturing files is illustrated in Figure 3. In a first step, the appropriate domains are selected and access to the selected domains is gained by the system. The system can work in domains where access has been given. Next, the existence of files in the selected domains are identified. This process is illustrated in greater detail in Figure 4. As described above, the files may be stored in several locations. In a next step, the system goes and gets all of the files. In a next step, the files for management are selected. The content of these files are converted to XML and the binary of the parent version of each file is captured. The database is then populated with this data.

The functions involved in capturing files across the network including individual PCs logged on to the network are illustrated in Figure 4. As before, the appropriate domains are selected and access to those domains is gained. In a next process the system scans the targeted network environments for all relevant files to be monitored. For example, in the case where the system is used to track changes in Microsoft Excel spreadsheets, the network is scanned for all Excel files. This process includes the sub-processes of running multiple scans to check for activity, checking for new files created and checking for files not found. New files include those created since the last scan. Files may not be found, for example if files have been deleted. The results of these sub-processes are used to build a report of the files found and of the activity occurring. After the network has been scanned for files, a report for business may be produced. The report enables the triggering of capturing of files for either the start of the process illustrated in Figure 1 or the maintenance of files illustrated in Figure 2.

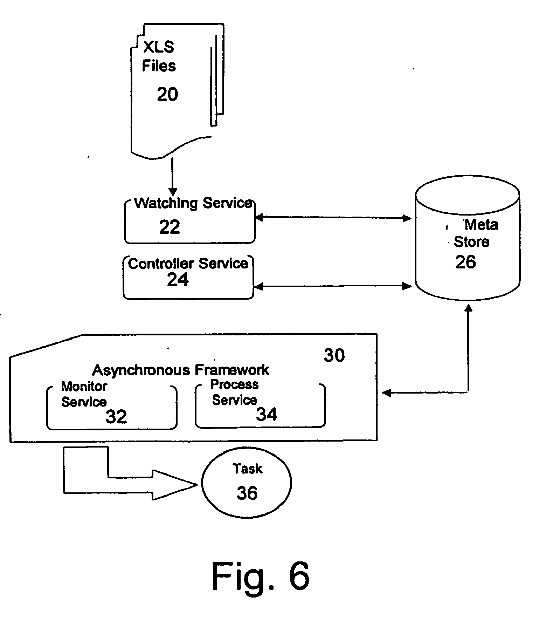

Figure 6 is a block diagram that shows the principal functional components of an embodiment of the invention. The entirety of spreadsheets stored within a file store 20 are accessed by a watching service 22. A Controlling service 24 is also provided. The watching service and controller service communicate with a meta-store 26. The meta-store 26 also communicates with an asynchronous framework comprising a monitoring service 32 and process service 34. The functional components of Figure 6 are described in greater detail below.

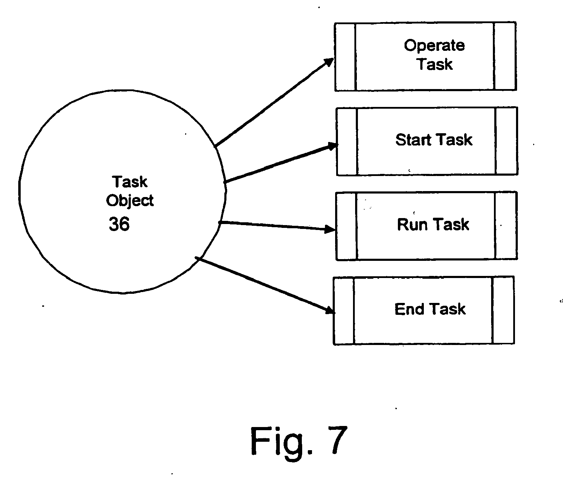

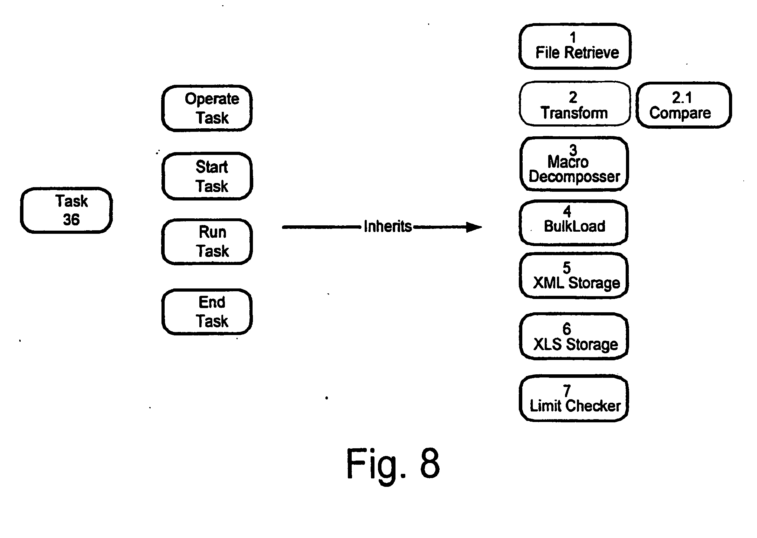

The tasks associated with the asynchronous framework 30 may be implemented by a task object 36, illustrated in greater detail in Figure 7. As illustrated In Figure 7, each task object exposes various methods, including an operate task, start task, run task and end task. The functional components of Figure 6 and the methods of Figure 7 are described in greater detail below. As illustrated in Figure 8 the task object 36 and the exposed methods inherit various classes derived from the task object 36 which perform various processes in the system. These include a file retrieve object, a transform object, a macro decomposer object, a bulkload object, an XML storage object, an XLS storage object and a limit checker object The transform class calls a compare class and the macro class. The methods of Figure 7 and the classes of Figure 8 are described in greater detai below.

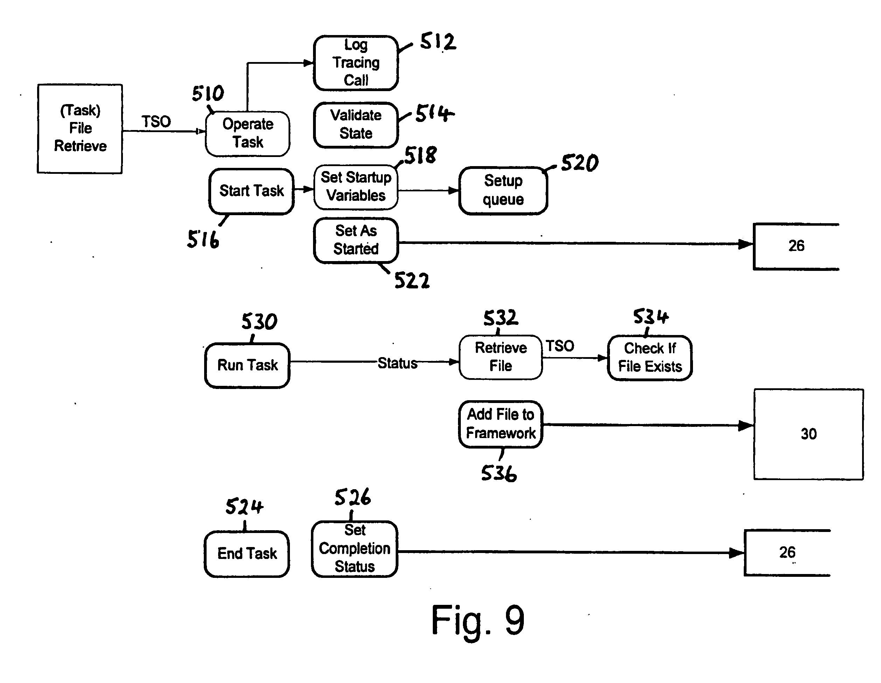

Figures 9 to 14 illustrates the operation of the various classes of Figure 8. In each case, the asynchronous frame launches the object using the operate task method, receiving a transaction state object (TSO) as an input containing the state variables for a task to use within its processing. The operate task method also calls a log tracing call function making a log entry into tracing code. A validate state operation is also performed. The start task method sets up running configuration variables in the set startup variables operation The variables are stored in the metastore 26. The run task method performs all the functions for completing the task. On completion of the task, the end task method sets all finishing operations including setting the completion status in the metastore 26.

As illustrated in Figure 9, the file retrieve class run task method includes the functions for retrieving a file, for checking if a file exists (via a transaction state object), and adding a file to the file processing queue in the monitoring service 32.

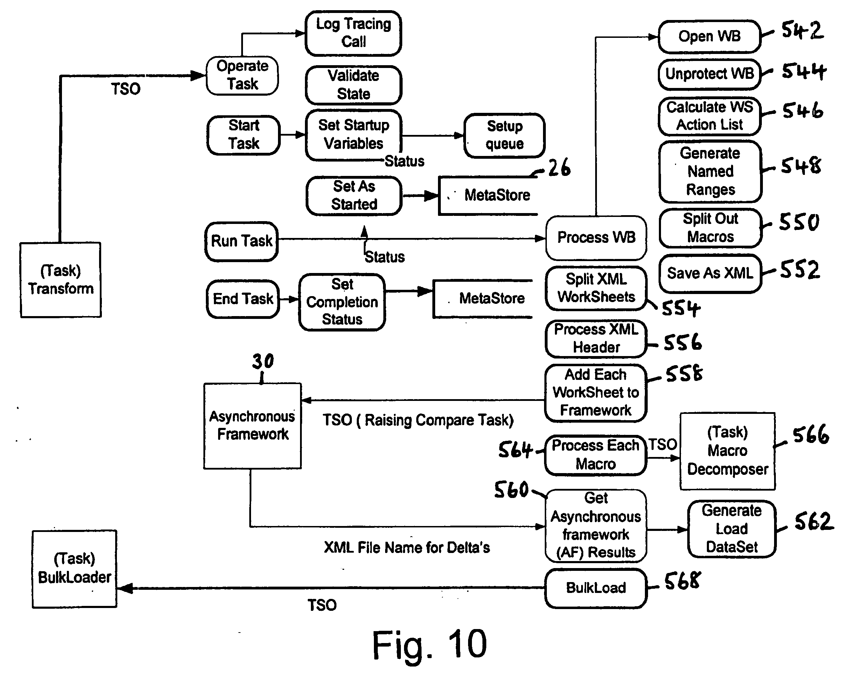

As illustrated in Figure 10, the transform class run task method includes a function for processing a workbook (WB). This includes functions for opening the workbook, unprotecting the workbook, calculating a worksheet (WS) action list, generating named ranges in the workbook, splitting out macros in the workbook and saving the workbook as an XML file. The run task method also includes functions for splitting XML worksheets, processing an XML header and adding each worksheet to the framework. In this last function, a transaction state object raising a compare task for comparing a spreadsheet at different time points is issued to the asynchronous framework. In a function for getting the asynchronous framework results, the result of the comparison task including the XML file name for the 'delta' representing the changes in the spreadsheet is returned from the asynchronous framework. Each macro is processed by issuing a transaction state object to the macro decomposer class and a bulk load is performed by issuing a transaction state object to the bulk loader class.

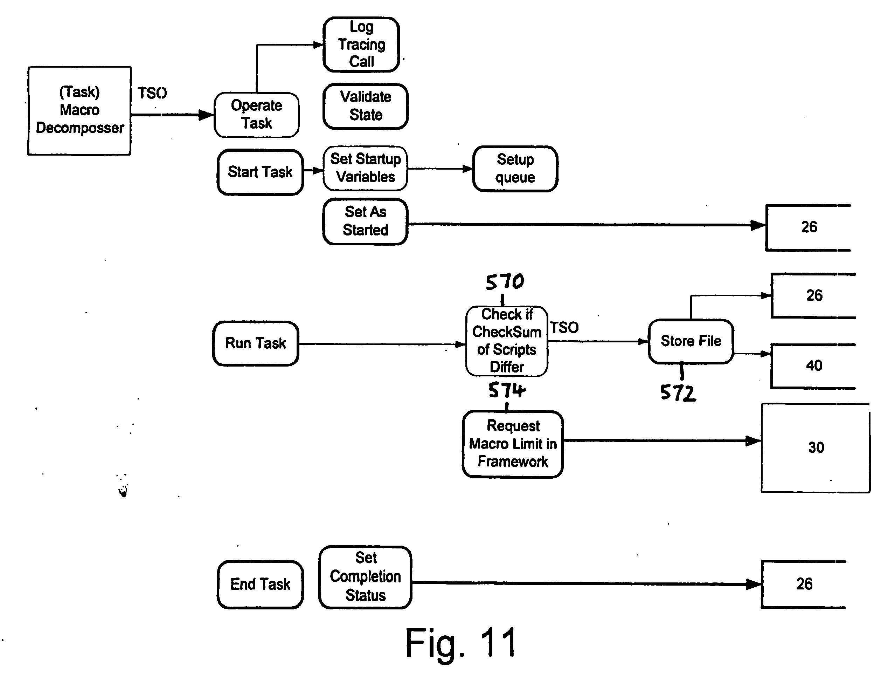

As illustrated in Figure 11, the macro decomposer run task method Includes a function for checking if the checksum of scripts differ. A transaction state object is issued by this function for storing a file in the metastore 26 and source code control system 40. A function is provided for requesting a macro limit in the asynchronous framework.

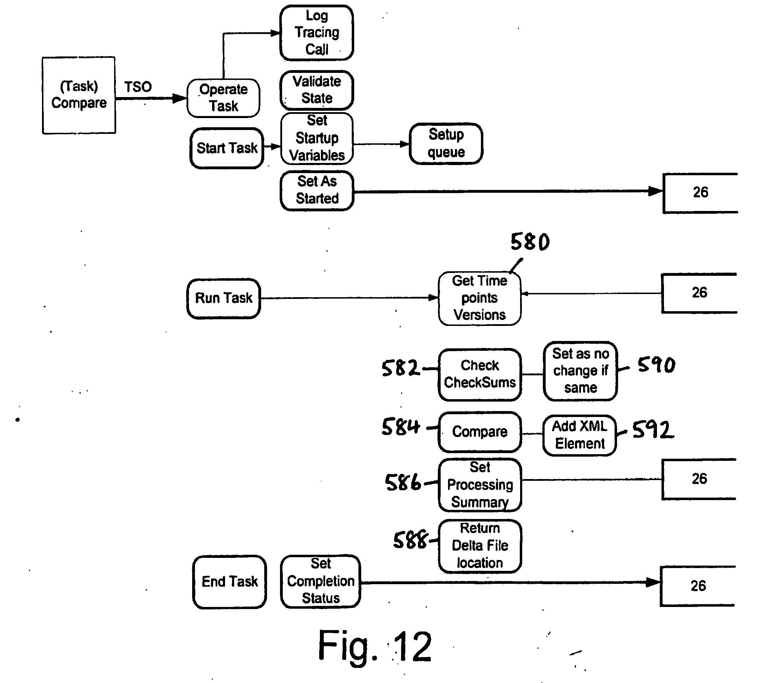

As illustrated in Figure 12, the compare class run task method includes a function for getting time points versions of a worksheet from the metastore 26. Functions are also provided which check checksums, compare worksheets, set a processing summary and return the location of the delta file resulting from the comparison.

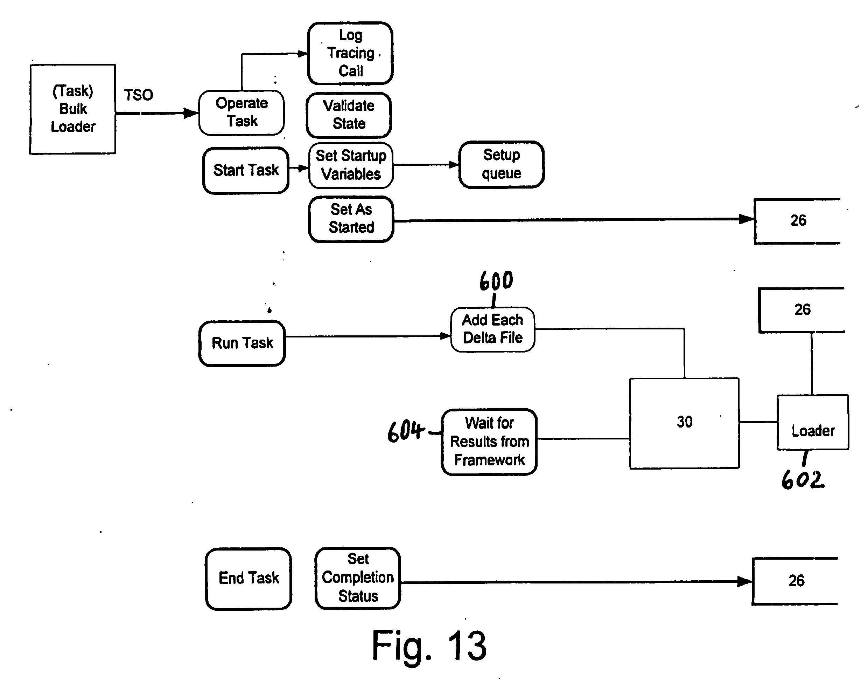

As illustrated in Figure 13, the bulk loader class run task method includes a function for adding each delta file generated from spreadsheet comparisons to the asynchronous framework 30. A loader function provides the data to the metastore 26. One function waits for results from the asynchronous framework.

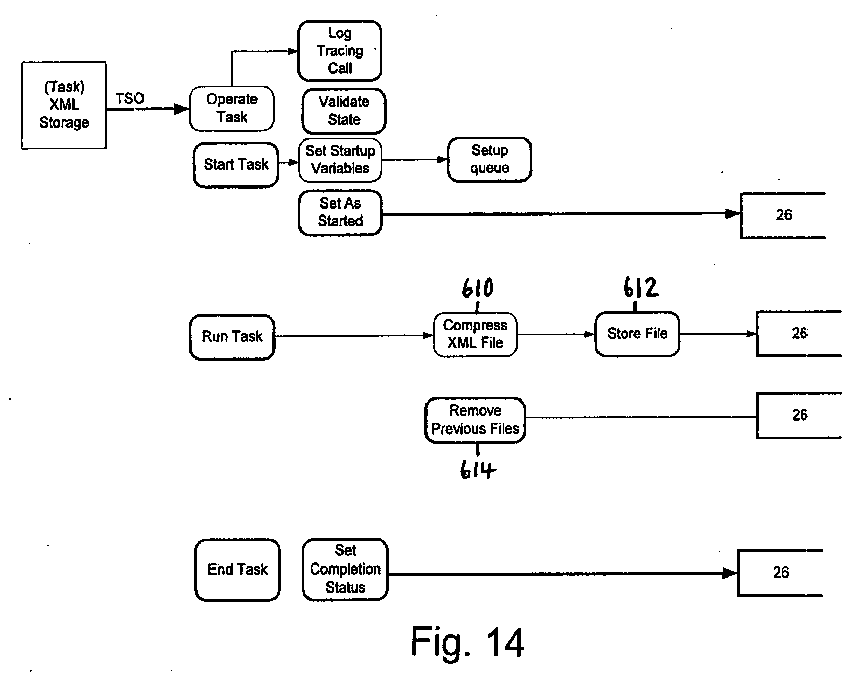

As illustrated in Figure 14, the XML storage class run task method includes a function for compressing an XML file. The compressed XML file is stored in the metastore 26 by a store file function. A function for removing previous files from the metastore is also performed.

### The Embodiment in Greater Detail

This embodiment of the invention is implemented within a network of computers. In this network there is an arbitrarily large number of clients, which are personal computers upon which users run spreadsheet applications to develop and use spreadsheets. Users may also store their personal spreadsheet files upon these computers. Files can be monitored on any drive linked to the network. Usually, but not always, important spreadsheets are located on central file servers. Also on the network is a monitoring server, which is responsible for monitoring and recording activities performed by users upon the spreadsheets.

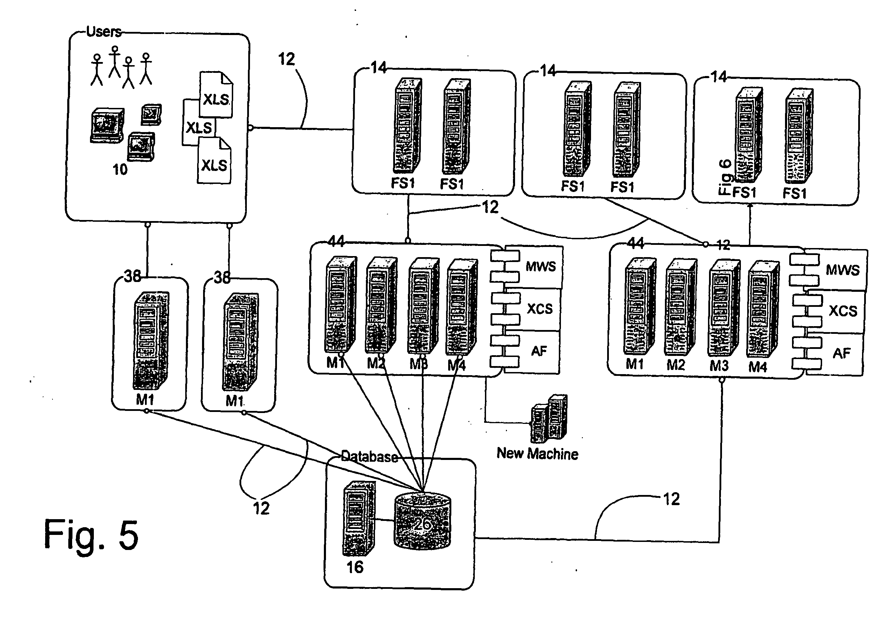

As shown in Figure 5, a network of computers within an enterprise comprises an arbitrarily large number of client computers 10. Each client computer 10 is used by a user to create personal documents, including spreadsheets. Typically, each client computer 10 has a single user who will have their own personal preferences and working practices associated with their spreadsheets.

Each client computer 10 is connected to a network 12. For the purposes of illustration, this is shown in Figure 1 as an integrated network. However, in practical embodiments, it is likely to include many subnets, and local-area and wide-area network links.

Also connected to the network 12 is one are more file servers 14. Depending on network policies, a user may choose to store files either on their client machine 10 or on a file server 14. Together, local storage provided by each client computer 10 and the or each file server 14 constitute a diverse file store.

A monitoring server 16 is connected to the network 12 such that it has access to the entire file store, or to part of the file store, according to the policy of its operator. It is within the monitoring server 16 that the processes provided by the invention are performed. The configuration of the monitoring server 16 is highly dependent upon the nature of the network as a whole. The monitoring server 16 must be capable of performing its task with minimal delay upon operation of software executed on the clients 10. In some cases, the monitoring server 16 may be a monolithic machine while in other cases it may be a cluster of machines controlled by servers 44 to enable parallel processing of multiple documents. These will now be described in greater detail.

In Figure 6, the entirety of spreadsheet files within the file store is shown at 20. The other items shown in Figure 6 are logical components of the monitoring server 16. These components are as follows: a watching service 22, a controller service 24 and, a meta store database 26, and an asynchronous framework 30 that includes a monitoring service 32 and a process service 34. Operation of the system as whole is controlled by passing task messages between the various logical components. This has the advantage that it enables the system to be scaled by adding further machines into a cluster and distributing task messages amongst them. It also allows the monitoring server to process the spreadsheet files 20 asynchronously of the clients, thereby ensuring a minimum of interference with the operation of their users' spreadsheet programs.

The function of the watching service 22 is to monitor the spreadsheet files 20 and to raise an event when any of them changes. Upon detection of a change, the file is read, its current contents compared with the contents of the file when it was last read, and changes which are identified are then stored in a database. Thus, every time the file in the file store changes to a record is made. It is therefore possible, starting with the file as it is in the file store, to apply the recorded changes in reverse and thereby arrive at the file as it was at an earlier stage in its development. Provision of the watching service 22 obviates the need to provide hooks into the spreadsheet programs to trigger an action upon a file being changed.

In general, this embodiment is concerned with processing spreadsheets created using Microsoft Excel. This application stores spreadsheets in files that conventionally have a filename extension ".XLS" (conveniently referred to as "XLS files"). These are binary files. However, the principles of the invention could equally well be applied to spreadsheets created using other applications irrespective of how these applications store spreadsheet data. Since it is notoriously difficult to perform content analysis on binary files, the approach taken by this embodiment is to first convert XLS files into a representation in the Extensible Markup Language (XML). Other spreadsheet programs, notably OpenOffice.org Calc use XML as their native file format. Therefore, the conversion step can be omitted when processing these files.

As has previously been discussed, this embodiment is implemented on a cluster of computers. Operations performed by the server are carried out as discrete tasks. Task objects are created and are placed in a task queue. When a task reaches the head of the queue, it is processed by the first available machine in the cluster.

Figure 7 illustrates the structure of the parent class from which all tasks are derived. Four main methods are exposed by every task object 36. These are: Operate Task, Start Task, Run Task and End Task. Operate Task is the method for the asynchronous framework to launch the object. It also makes a log entry into tracing code. It takes as an input a Transaction State Object (TSO) which contains the state variables for a task to use within its processing. The Start Task method sets up running configuration variables. Run Task performs all functions for completing the task. End Task sets all finishing operations.

The principal classes derived from that class illustrated in Figure 7 are themselves illustrated in Figure 8. These include task objects to retrieve a file from the file store, transform and compare the file contents, process macros, handle storage within the database, and handling change information. These classes will now be described briefly.

File Retrieve: this class is responsible for copying the file from the targeted changed location.

Transform: this class is responsible for taking an XLS file and deconstructing the file into XML worksheets. The Transform class calls the Comparison class and macro class to perform all delta operations. This class will deconstruct all named ranges and detect any changes. This class also spawns the Compare and Macro Decomposer tasks into the asynchronous framework.

Compare: this class is responsible for calculating and classifying the state at the most recent time point and a description of the changes, known as "deltas" between two time points of the XML. This class classifies all change types and cell types and tags each delta change with the associated change. This class uses the following algorithm:
- Position the pointer at the first cell from the previous XML file and current file XML file.
- Compare the cell matrix positions (row position, column position) of the two cells. If the current and previous cell positions are the same, then compare the cell values and formulas to check for differences. The comparison will identify and classify the type of change. If the cell contains a formula the cell is tagged with the type of "formula" to distinguish clearly between a cell that contains a fixed numerical value and one that, when displayed, shows the same value as a result of a formula evaluation. The difference between the cell changes is also established. For an integer value the difference is between the two integers. A string difference is based on the length of each string. A date difference is calculated by the number of days. If the current cell position is greater than the previous cell position, then add a "data added" record to the delta XML file. If the previous cell position is greater than the current cell position, then add a "data deleted" record to the delta XML file.

- Get the next cell from the file where the cell matrix position is the smallest and start the comparison process again by comparing the cell matrix positions.
- Repeat this process until both the previous and current XML file have been read until the end of the file.

The completed process results in a delta XML file. This contains the categorised differences between the current and previous time points.

Bulk Load: this class is responsible for bulk inserting the delta file created from the Transform/Compare task.

XML Storage: this class is responsible for storing the XML file created from the transformation of the document. This class serves to compress the current generated XML file, remove the previous file and upload the new file to the datastore.

Macro Decomposer: this class calculates the differences between two programmatic scripts at two time points. The capture script may be integrated into an existing source code control system 40.

Limit Checker: this class monitors change types occurring within the datastore and provides alerts to the specified targets.

If the embodiment provides a Web-based interface through which a user can gain access to data within the database, this provides a central point from which all spreadsheet activity can be monitored. A process running on the monitoring server 16 generates queries that are applied to the database and from the results of those queries generates pages that can be served to a Web browser by a Web server 38. The range of queries and reports that can be generated is essentially without limit. These are tailored to the specific requirements of a particular user of the system. The same interface can also be used for configuration and maintenance of the system. Provision of a Web-based interface to a database is a routine matter and the details will not therefore be described here further.

Additionally, it is possible to generate alerts based on the result of the queries. For example, an administrator may define a range of prohibited actions for some parts of a specific spreadsheet, or may wish to be alerted when the value of a particular cell moves outside of a predetermined range. The system may generate and dispatch an e-mail message to a predetermined address when it detects that an alert should be issued.

Several of the main screens provided by other Web-based interface will now be described briefly.

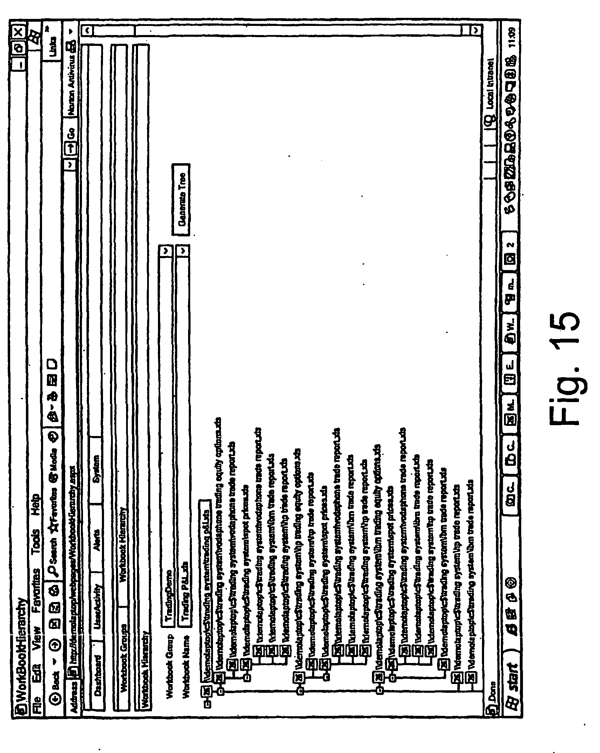

Figure 15 is a screen that allows a user to see which files are being monitored and, where files are linked, the hierarchy of linked files.

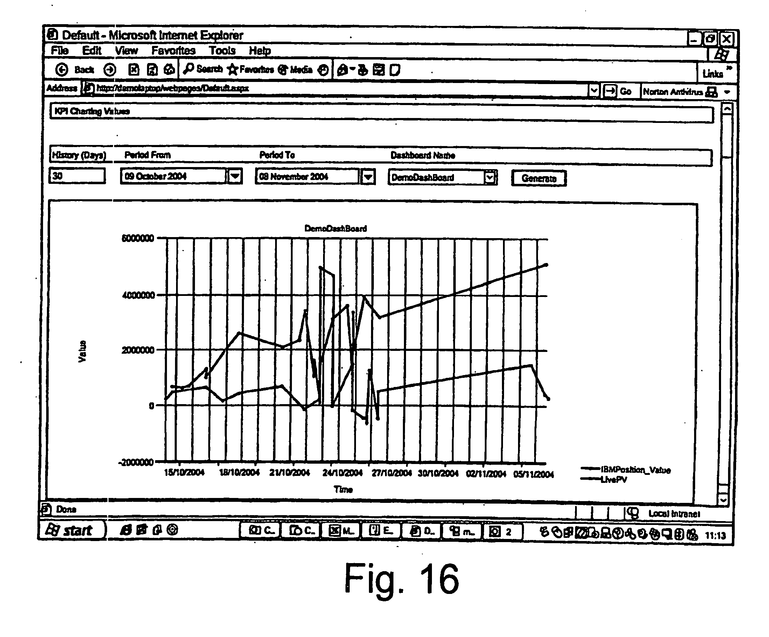

Figure 16 shows a screen that allows the user to monitor how the value of a particular cell within a spreadsheet changes over time. Value is represented graphically in this screen.

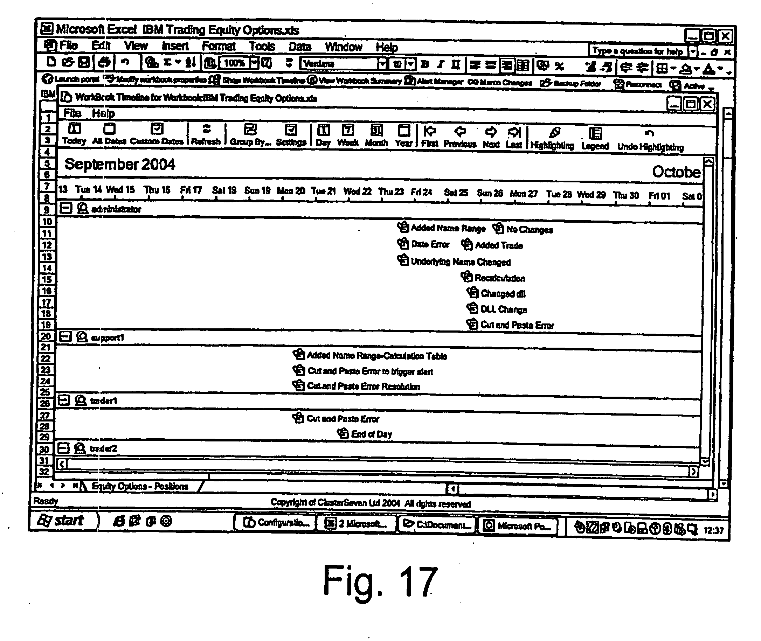

Figure 17 shows a screen that presents a user with a summary of changes that have been made to the spreadsheet or over time. The nature of each change and the person who made it are identified.

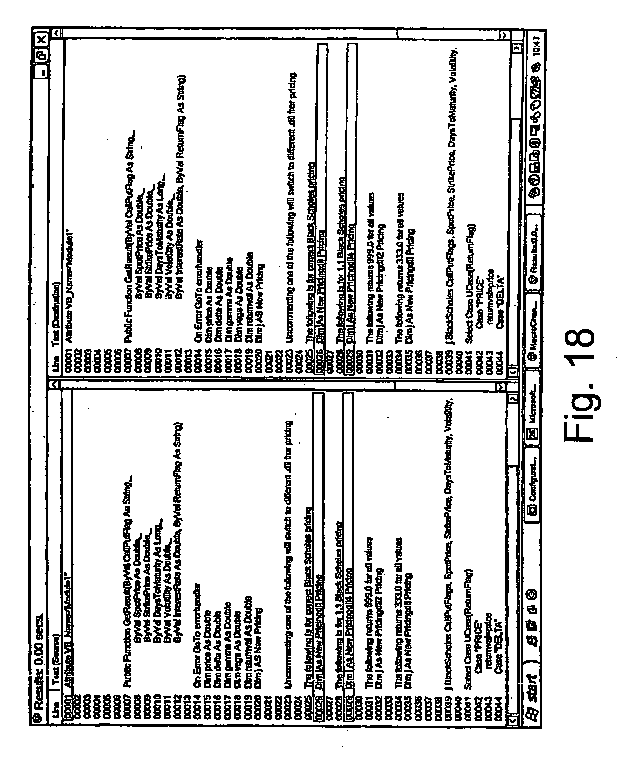

Figure 18 illustrates the source code control aspect of the invention. In Figure 18, the right-hand pane shows a segment of program code in its current version, while the left- hand pane shows the previous version of the code.

### Row or Column Insertion. Deletion and Shifting

As described above, in a typical embodiment, the comparison means is operative to compare a current file in the file store with a previous version of that file. Each cell in the current file is compared with the corresponding cell in the previous version so that changes in the spreadsheet may be recorded on a cell-by-cell basis. However, various common actions in spreadsheet editing cause large numbers of entities (such as values and formulas) to shift position within the spreadsheet. For example, when a row is inserted or deleted, this action causes all of the values and formulas below the inserted or deleted row to shift up or down by one cell. Similarly, inserting or deleting a column causes all the values and formulas in cells to the right of the inserted or deleted column to shift left or right by one cell. In another example, sorting values by rows or columns cause values in rows or columns to be re-ordered and shift by varying amounts.

With these types of actions, analysing the differences between a current and previous version of a spreadsheet on a cell-by-cell basis results in a large degree of noise resulting from the shifting of sometimes large numbers of entities. A typical delta file resulting from the comparison would indicate many changes as changes of value in particular cells whereas it would be more appropriate to recognise these changes as resulting from the shifting of entities. It is preferable therefore, when analysing changes in a spreadsheet, to highlight the fact that some change have occurred due to shifting entities caused by a single action. This allows the noise in the spreadsheet changes to be filtered out.

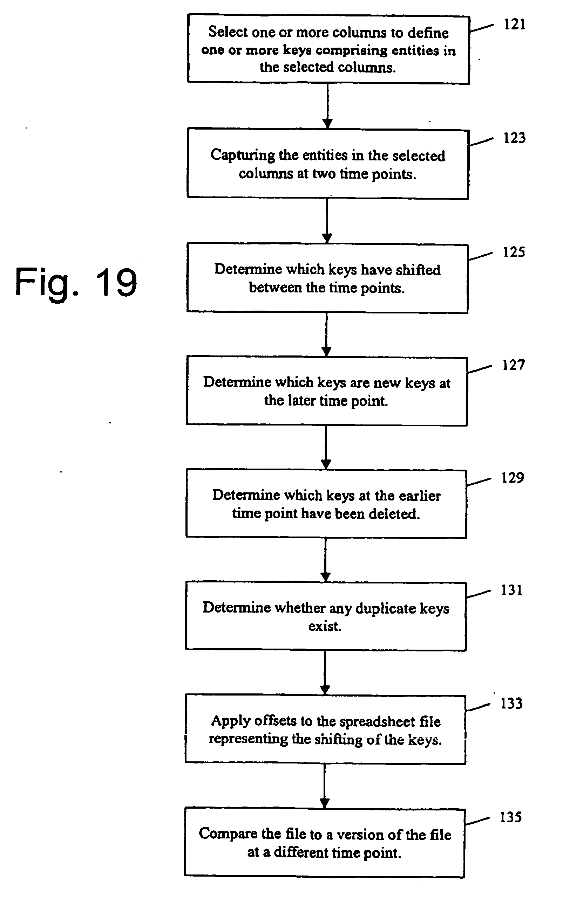

In order to determine whether changes in multiple cells have arisen due to a single action, while retaining the cell-by-cell comparison scheme, the following method may be employed, with reference to the flow chart of Figure 19. First, the movements of a sample of entities in the spreadsheet are tracked to determine the movement of entities in general in the spreadsheet. Then, prior to comparison of two version of a spreadsheet, the determined movement of the entities is applied to the earlier version of the spreadsheet before a cell-by-cell comparison between the two versions of the spreadsheet is applied. In the preferred embodiment, the sample of entities whose movement are tracked are formed of the entities in one or more rows and/or one or more columns. These entities may be referred to as 'keys'. Determining the position of each key in the two versions of the spreadsheet allows the movement of each key between the two versions to be determined.

As will become apparent, one or mores columns may be selected to detect movement of entities caused by the insertion or deletion of rows or sorting of cells in the vertical direction. One or more rows may be selected to detect insertion or deletion of columns or sorting of cells in the horizontal direction. In the example described below, one or more columns are selected. However, the corresponding process with respect to rows may easily be applied as an alternative, or in combination with column selection. In a first step 121 of the exemplary method, one or more columns are selected to define one or more keys comprising entities in the selected columns.

Preferably, a column is selected such that each key thereby obtained is a unique entity, such as a unique value. The reason for this is to facilitate tracking the movement of particular keys. If two keys were the same then it would not be possible to determine with certainty which of the two keys in one version of the spreadsheet corresponds to a specific one of the keys in an earlier version of the spreadsheet The movement of such duplicated keys could not therefore be determined with certainty. In many spreadsheets, one or more columns do contain values which are all different from one another. However, if there is no column in which each of the entities is unique, a combination of two or more columns may be used to define a set of unique keys. For example, the entities in a particular row of two or more columns may be concatenated to form a single key. This process is repeated for each of the other rows to form the set of keys. It can be seen that this process will generate a unique set of keys if a set of columns its chosen such that the entities in any row of the columns form a set which is different from the entities in any other row of the columns.

The selection of one or more columns to define a set of keys may be performed using an entity selector either automatically by the system or manually by a user. For example, in the case of manual selection, the system is configured to allow the user to highlight one or more columns, thereby selecting the entities in those columns as keys. In the preferred embodiment the system provides a range manager screen whereby a user can select the named range they are interested in and then choose the column, or combination of columns, that defines uniqueness for the entities within the named range. In the case of automatic selection, the system may be configured to select the most appropriate columns based on the particular spreadsheet being analysed.

The selection of the keys is performed initially once it is determined that it is desired to track the change in a particular spreadsheet. The subsequent processing to track the changes in the spreadsheet will now be described.

During processing of the spreadsheet by the system, at each time-point, the entities in the selected column or columns are captured and stored in a database.

As illustrated in Figure 19, in a next step 123, the entities in the selected columns at two time points are captured. This step provides information as to the location of each key at different time points.

To track spreadsheet changes between two time points, the system is arranged to determine the movement of each key between the time-points using a tracker. In a next step 125, the system determines which keys have shifted between the time points. To achieve this, the captured data for the first time point is searched for each key and the row position of each key at the first time point is determined. The captured data for the second time point is searched for each key and the row position of each key at the second time point is determined. The row position of each key at the first time point is subtracted from the row position of each corresponding key at the second time point by an offset determinator to define a value or offset representing the number of rows each key has shifted between the two time points. The movement of these key can be categorised as 'stationary' if a key has not shifted, or 'non-stationary' if a key has shifted.

The information representing the movement of keys between two particular time points may be stored in the database. A database entry for each key is created and placed in one of several different buckets, each bucket corresponding to one of the possible types of movement of the keys. For example, an entry for each stationary key is placed in a 'stationary' bucket, while an entry for each non-stationary key is placed in a 'non-stationary' bucket. Each of these entries may contain the current row the key is on and the previous row the key was on.

When a row has been inserted or deleted between two time points, the entities on the inserted or deleted row exist at one time point but do not exist at the other time point. For example, when a row is inserted, new entities are created on the inserted row which exist at the later time point but which do not exist at the earlier time point. Similarly, when a row is deleted, entities on the deleted row exist at the earlier time point but do not exist at the later time point. These processes cause the deletion of existing keys and the creation of new keys in the selected columns.

In a next step 127, an entity creation determinator of the system determines which keys are new keys at the later time point. In a further step 129, an entity deletion determinator of the system determines which keys at the earlier time point have been deleted. The system is configured to analyse the information stored in the database to determine whether any entities existing at the earlier time point do not exist at the later time point. Such entities may be categorised as 'deleted'. The system is also configured to determine whether there are any new entities at the later time point which do not exist at the earlier time point. Such entities may be categorised as `new'. A database entry for each deleted entity may be created and placed in a 'deleted' bucket while a database entry for each new entity may be created and placed in a 'new' bucket. Each entry may contain the row the entry is, or was, on at the relevant time point.

The system is also arranged to analyse the information stored in the database to determine if any keys at either of the two time points are the same. This may occur for example if the original keys selected were not all unique, if the entities in the selected columns are modified or if a new non-unique key is created. Where a key is not unique, the key may be categorised as 'duplicate'. In a next step 131, an entity duplication determinator of the system determines whether any duplicate keys exist. A database entry for each duplicate key may be created and placed in a 'duplicate' bucket.

Once the movement of each key between the time points have been placed in the relevant buckets, a cell-by-cell comparison of the spreadsheets at the two time points can be made as described above, but modified to take into account the shifting of entities. This removes the effect of noise caused by actions such as insertion and deletion of rows, and sorting operations

In processes such as row insertion and deletion and sorting in the vertical direction, the entities within each column shift by the same amount. For example, in a row insert operation, all of the entities occurring above the inserted row do not shift, and all of the entities occurring below the inserted row shift down by one cell, regardless of which column the entities are in. Similarly, when the values in a spreadsheet are sorted according to the values in a first column, if an entity in a particular row of the first column shifts up by, say, five cells, then the entities in the same row of the other columns also shift up by the same amount. Therefore, if it is determined that a key has shifted by a particular amount between time points then it can be assumed that the entities in the other columns on the same row as the key have shifted in the same way as the key.

As illustrated in Figure 19, in a next step 133, offsets are applied to the spreadsheet file by an offset applicator before the file is compared to a version of the file at a different time point in a next step 135. When using the cell-by-cell comparison described above, when comparing the two XML files for the two time points, for each row corresponding to a non-stationary key, the appropriate offset is added to the row number represented in the XML. This results in a comparison between two equivalent shifted values rather than two values which happen to occupy the same cell at the two time points. All new keys can be added from the current time point file, ignoring the previous time point file. All deleted keys can be added from the previous time point file ignoring the current time point file. Any key which is identified as a duplicate key is ignored during the processing because correct key identification between the two time points cannot be assured.

In the example described above, one or more columns were selected to define keys to take into account row insertion and deletion operations and sort operations in the vertical direction. However, it can be seen that a similar technique may be employed whereby one or more rows are selected to define keys to take into account column insertion and deletion operations and sorting operations in the horizontal direction. It will also be appreciated by the skilled person that both rows and columns could be selected in combination.

The methods described above may be implemented by suitable software stored in a memory, comprising computer executable code for execution by a suitable processor.

Microsoft and Excel are trade marks of Microsoft Corporation.

## Claims

1. A system for monitoring and auditing data in one or more spreadsheets, the system comprising:
- an entity selector (123) for selecting one or more entities in a spreadsheet;
- a tracker (125) for tracking the shift in position of the selected entities between two time points; and
- an offset determinator (127 - 131) arranged to derive one or more offset values from information received from the tracker, the offset values representing the shift in position of the entities in the spreadsheet;
**characterised by**:
- an offset applicator (133) for applying the offset values to the spreadsheet data before comparing the spreadsheet data with a version of the spreadsheet data at a different time point.

2. A system according to claim 1, in which the tracker is arranged to store data representing the position of the selected entities at the two time points, and in which the offset determinator is arranged to determine the position of a selected entity at the two time points using information received from the tracker and to derive an offset value for the selected entity by calculating the difference in position of the selected entity between the two time points.

3. A system according to claim 1, in which the one or more entities comprise entities in one or more selected rows or selected columns.

4. A system according to claim 3, further comprising an entity creation determinator for determining whether an entity has been created in one of the selected rows or columns.

5. A system according to claim 3, further comprising an entity deletion determinator for determining whether an entity has been deleted from one of the selected rows or columns.

6. A system according to claim 3, further comprising an entity duplicate determinator for determining whether an entity in one of the selected rows or columns is a duplicate of another entity in the selected rows or columns.

7. A method for monitoring and auditing data in one or more spreadsheets, the method comprising:
- selecting (123) one or more entities in a spreadsheet;
- tracking (125) the shift in position of the selected entities between two time points; and
- deriving (127 - 131) one or more offset values from the shift in position of the selected entities, the offset values representing the shift in position of the entities in the spreadsheet;
**characterised by**:
- applying (133) the offset values to spreadsheet data before comparing the spreadsheet data with a version of the spreadsheet data at a different time point.

8. A method according to claim 7, further comprising:
- storing data representing the position of the selected entities at the two time points;
- determining the position of a selected entity at the two time points; and
- deriving an offset value for the selected entity by calculating the difference in position of the selected entity between the two time points.

9. A method according to claim 7, in which the one or more entities comprise entities in one or more selected rows or selected columns.

10. A method according to claim 9, further comprising determining whether an entity has been created in one of the selected rows or columns.

11. A method according to claim 9, further comprising determining whether an entity has been deleted from one of the selected rows or columns.

12. A method according to claim 9, further comprising determining whether an entity in one of the selected rows or columns is a duplicate of another entity in the selected rows or columns.

13. A computer program for monitoring and auditing data in one or more spreadsheets, the program comprising computer executable instructions, which, when executed by a processor, cause the processor to perform the steps of any of the methods of claims 7 to 12.

## Patentansprüche

1. System zum Überwachen und Prüfen von Daten in einer oder mehreren Kalkulationstabellen, wobei das System Folgendes umfasst:
- einen Objektselektor (123) zum Auswählen von einem oder mehreren Objekten in einer Kalkulationstabelle;
- einen Tracker (125) zum Verfolgen der Positionsverschiebung der ausgewählten Objekte zwischen zwei Zeitpunkten; und
- einen Versatzdeterminator (127 - 131) zum Ableiten von einem oder mehreren Versatzwerten von von dem Tracker empfangenen Informationen, wobei die Versatzwerte die Positionsverschiebung der Objekte in der Kalkulationstabelle repräsentieren;
**gekennzeichnet durch**:
- einen Versatzapplikator (133) zum Anwenden der Versatzwerte auf die Kalkulationstabellendaten vor dem Vergleichen der Kalkulationstabellendaten mit einer Version der Kalkulationstabellendaten zu einem anderen Zeitpunkt.

2. System nach Anspruch 1, wobei der Tracker so ausgelegt ist, dass er Daten speichert, die die Positionen der ausgewählten Objekte zu den beiden Zeitpunkten repräsentieren, und wobei der Versatzdeterminator die Aufgabe hat, die Position eines ausgewählten Objekts zu den beiden Zeitpunkten anhand von von dem Tracker empfangenen Informationen zu ermitteln und einen Versatzwert für das ausgewählte Objekt durch Berechnen der Positionsdifferenz des ausgewählten Objekts zwischen den beiden Zeitpunkten abzuleiten.

3. System nach Anspruch 1, bei dem die ein oder mehreren Objekte Objekte in einer oder mehreren ausgewählten Reihen oder ausgewählten Spalten umfassen.

4. System nach Anspruch 3, das ferner einen Objekterzeugungsdeterminator umfasst, um zu ermitteln, ob ein Objekt in einer der ausgewählten Reihen oder Spalten erzeugt wurde.

5. System nach Anspruch 3, das ferner einen Objektlöschdeterminator umfasst, um zu ermitteln, ob ein Objekt aus einer der ausgewählten Reihen oder Spalten gelöscht wurde.

6. System nach Anspruch 3, das ferner einen Objektduplikatdeterminator umfasst, um zu ermitteln, ob ein Objekt in einer der ausgewählten Reihen oder Spalten ein Duplikat eines anderen Objekts in den ausgewählten Reihen oder Spalten ist.

7. Verfahren zum Überwachen und Prüfen von Daten in einer oder mehreren Kalkulationstabellen, wobei das Verfahren Folgendes umfasst:
- Auswählen (123) von einem oder mehreren Objekten in einer Kalkulationstabelle;
- Verfolgen (125) der Positionsverschiebung der ausgewählten Objekte zwischen zwei Zeitpunkten; und
- Ableiten (127 - 131) von einem oder mehreren Versatzwerten von der Verschiebungsposition der ausgewählten Objekte, wobei die Versatzwerte die Positionsverschiebung der Objekte in der Kalkulationstabelle repräsentieren;
**gekennzeichnet durch**:
- Anwenden (133) der Versatzwerte auf Kalkulationstabellendaten vor dem Vergleichen der Kalkulationstabellendaten mit einer Version der Kalkulationstabellendaten zu einem anderen Zeitpunkt.

8. Verfahren nach Anspruch 7, das ferner Folgendes beinhaltet:
- Speichern von Daten, die die Positionen der ausgewählten Objekte zu den beiden Zeitpunkten repräsentieren,
- Ermitteln der Position eines ausgewählten Objekts zu den beiden Zeitpunkten; und
- Ableiten eines Versatzwertes für das ausgewählte Objekt durch Berechnen der Positionsdifferenz des ausgewählten Objekts zwischen den beiden Zeitpunkten.

9. Verfahren nach Anspruch 7, bei dem die ein oder mehreren Objekte Objekte in einer oder mehreren ausgewählten Reihen oder ausgewählten Spalten umfassen.

10. Verfahren nach Anspruch 9, das ferner das Ermitteln beinhaltet, ob ein Objekt in einer der ausgewählten Reihen oder Spalten erzeugt wurde.

11. Verfahren nach Anspruch 9, das ferner das Ermitteln beinhaltet, ob ein Objekt in einer der ausgewählten Reihen oder Spalten gelöscht wurde.

12. Verfahren nach Anspruch 9, das ferner das Ermitteln beinhaltet, ob ein Objekt in einer der ausgewählten Reihen oder Spalten ein Duplikat eines anderen Objekts in den ausgewählten Reihen oder Spalten ist.

13. Computerprogramm zum Überwachen und Prüfen von Daten in einer oder mehreren Kalkulationstabellen, wobei das Programm von einem Computer ausführbare Befehle umfasst, die bei Abarbeitung durch einen Prozessor bewirken, dass der Prozessor die Schritte nach einem der Verfahren der Ansprüche 7 bis 12 ausführt.

## Revendications

1. Système de surveillance et de vérification de données dans un ou plusieurs tableurs, le système comprenant :
- un sélecteur d'entités (123) pour sélectionner une ou plusieurs entités dans un tableur ;
- un suiveur (125) pour suivre la dérive de position des entités sélectionnées entre deux points dans le temps ; et
- un déterminateur de décalage (127 à 131) agencé pour dériver une ou plusieurs valeurs de décalage à partir d'informations reçues du suiveur, les valeurs de décalage représentant la dérive de position des entités dans le tableur;
**caractérisé par** :
- un applicateur de décalage (133) pour appliquer les valeurs de décalage aux données de tableur avant de comparer les données de tableur à une version des données de tableur à un différent point dans le temps.

2. Système selon la revendication 1, dans lequel le suiveur est agencé pour mémoriser les données représentant la position des entités sélectionnées aux deux points dans le temps, et dans lequel le déterminateur de décalage est agencé pour déterminer la position d'une entité sélectionnée aux deux points dans le temps au moyen des informations reçues du suiveur et dériver une valeur de décalage pour l'entité sélectionnée en calculant la différence de position de l'entité sélectionnée entre les deux points dans le temps.

3. Système selon la revendication 1, dans lequel les une ou plusieurs entités comprennent des entités dans une ou plusieurs lignes sélectionnées ou colonnes sélectionnées.

4. Système selon la revendication 3, comprenant en outre un déterminateur de création d'entité pour déterminer si une entité a été créée ou non dans l'une des lignes ou colonnes sélectionnées.

5. Système selon la revendication 3, comprenant en outre un déterminateur de suppression d'entité pour déterminer si une entité a été supprimée ou non de l'une des lignes ou colonnes sélectionnées.

6. Système selon la revendication 3, comprenant en outre un déterminateur de double entité pour déterminer si une entité dans l'une des lignes ou colonnes sélectionnées est ou non un double d'une autre entité dans les lignes ou colonnes sélectionnées.

7. Procédé de surveillance et de vérification de données dans un ou plusieurs tableurs, le procédé comprenant :
- la sélection (123) d'une ou de plusieurs entités dans un tableur ;
- le suivi (125) de la dérive de position des entités sélectionnées entre deux points dans le temps ; et
- la dérivée (127 à 131) d'une ou de plusieurs valeurs de décalage à partir de la dérive de position es entités sélectionnées, les valeurs de décalage représentant la dérive de position des entités dans le tableur ;
**caractérisé par** :
- l'application (133) des valeurs de décalage aux données de tableur avant de comparer les données de tableur à une version des données de tableur à un différent point dans le temps.

8. Procédé selon la revendication 7, comprenant en outre:
- la mémorisation des données représentant la position des entités sélectionnées aux deux points dans le temps ;
- la détermination de la position des entités sélectionnées aux deux points dans le temps ; et
- la dérivée d'une valeur de décalage pour l'entité sélectionnée en calculant la différence de position de l'entité sélectionnée entre les deux points dans le temps.

9. Procédé selon la revendication 7, dans lequel les une ou plusieurs entités comprennent des entités dans une ou plusieurs lignes sélectionnées ou colonnes sélectionnées.

10. Procédé selon la revendication 9, comprenant en outre la détermination si une entité a été créée ou non dans l'une des lignes ou colonnes sélectionnées.

11. Procédé selon la revendication 9, comprenant en outre la détermination si une entité a été supprimée ou non de l'une des lignes ou colonnes sélectionnées.

12. Procédé selon la revendication 9, comprenant en outre la détermination si une entité dans l'une des lignes ou colonnes sélectionnées est un double ou non d'une autre entité dans les lignes ou colonnes sélectionnées.

13. Programme informatique de surveillance et vérification de données dans un ou plusieurs tableurs, le programme comprenant des instructions exécutables par ordinateur, lesquelles, lorsqu'elles sont exécutées par un processeur, amènent le processeur à exécuter les étapes de l'un quelconque des procédés selon les revendications 7 à 12.
